# EUROPÄISCHE PATENTSCHRIFT

(11) **EP 2 861 074 B1**
(45) Veröffentlichungstag und Bekanntmachung des Hinweises auf die Patenterteilung: **12.07.2017**
(21) Anmeldenummer: 13726480.0
(22) Anmeldetag: 24.05.2013
(51) Int. Cl.: A01N 47/30, A01P 21/00, A01N 59/06

(54) **DIURON ENTHALTENDE AUSDÜNNUNGSMITTEL**
THINNER CONTAINING DIURON
PRODUIT D'ÉCLAIRCISSAGE CONTENANT DU DIURON

(30) Priorität: 25.05.2012 EP 12169559
(43) Veröffentlichungstag der Anmeldung: 22.04.2015
(73) Patentinhaber: LANXESS DISTRIBUTION GmbH, 51369 Leverkusen (DE)
(72) Erfinder: SAALFELD, Frank, 51515 Kürten-Dürscheid (DE)
(74) Vertreter: Deblon, Jörg-Stephan
(86) Internationale Anmeldenummer: PCT/EP2013/060778
(87) Internationale Veröffentlichungsnummer: WO 2013/174993

(56) Entgegenhaltungen:
- WO-A1-03/020034
- WO-A1-2010/115546
- WO-A2-2009/064703
- US-A- 4 613 354
- DATABASE CAPLUS [Online] CHEMICAL ABSTRACTS SERVICE, COLUMBUS, OHIO, US; 1976, G. I. Moss: "Thinning 'Washington' navel and 'Late Valencia' sweet orange fruits with photosynthetic inhibitors", XP002685918, Database accession no. 1976:160508 & G. I. MOSS: "Thinning 'Washington' navel and 'Late Valencia' sweet orange fruits with photosynthetic inhibitors", HORTSCIENCE, Bd. 11, Nr. 1, 1976, Seiten 48-50, ISSN: 0018-5345
- DELVALLE T B G ET AL: "THINNING OF PEACHES PRUNUS-PERSICA BY TEMPORARY INHIBITION OF PHOTOSYNTHESIS WITH TERBACIL", JOURNAL OF THE AMERICAN SOCIETY FOR HORTICULTURAL SCIENCE, AMERICAN SOCIETY FOR HORTICULTURAL SCIENCE, ALEXANDRIA, VA, US, Bd. 110, Nr. 6, 1. Januar 1985 (1985-01-01), Seiten 804-807, XP009152252, ISSN: 0003-1062
- BYERS R E ET AL: "APPLE THINNING BY PHOTOSYNTHETIC INHIBITION", JOURNAL OF THE AMERICAN SOCIETY FOR HORTICULTURAL SCIENCE, AMERICAN SOCIETY FOR HORTICULTURAL SCIENCE, ALEXANDRIA, VA, US, Bd. 115, Nr. 1, 1. Januar 1990 (1990-01-01), Seiten 14-19, XP001120641, ISSN: 0003-1062 in der Anmeldung erwähnt
- DATABASE WPI Week 199845 Thomson Scientific, London, GB; AN 1998-525433 XP002685919, & JP 10 231227 A (KOEI CHEM IND CO LTD) 2. September 1998 (1998-09-02)

## Beschreibung

Die vorliegende Erfindung betrifft ein Verfahren zur Fruchtausdünnung im 6 bis 30 mm-Fruchtstadium an Apfelsorten oder Birnensorten unter Einsatz von 3-(3,4-Dichlorphenyl)-1,1-dimethylharnstoff (Diuron), sowie die entsprechende Verwendung von Diuron.

Die Ausdünnung gilt weithin als eine der wichtigsten Maßnahmen im Obstanbau, wobei unter Ausdünnung die Reduktion der Anzahl der befruchteten Blüten bzw. der Fruchtzahl zu verstehen ist. Die Ausdünnung erfolgt typischerweise entweder mechanisch maschinell oder manuell oder durch chemische Mittel.

Durch Ausdünnung erzielbare Vorteile sind insbesondere die Verbesserung der Fruchtgröße, der Fruchtfarbe, und/oder der Fruchtqualität die mit erheblicher Steigerung der Wirtschaftlichkeit einhergeht.

Weiterhin wird eine Verbesserung der Blüte im Nachfolgejahr einer guten Blüte bzw. die Brechung und Verhinderung der Alternanz bei gefährdeten Sorten und Junganlagen sowie die Vermeidung des Brechens überladener Äste, eine starke Erschöpfung des Baums und einer damit einhergehenden reduzierten Kältehärte des Baumes beobachtet.

In den meisten Anbauregionen ist eine manuelle Ausdünnung aus Kostengründen prohibitiv. Die maschinelle Ausdünnung ist nur begrenzt einsetzbar, da sie eine bestimmte Erziehungsform der Bäume erfordert und typischerweise ein hohes Maß an Kollateralschäden an der Pflanze verursacht.

Die chemische Ausdünnung ist daher vorteilhaft.

Bekannte chemische Ausdünnungsmittel wie Harnstoff und Ammoniumthiosulfat, die für diesen Zweck zum Beispiel in Deutschland nicht zugelassen sind, besitzen jedoch eine wenig zufriedenstellende Wirksicherheit und sind in den eingesetzten, notwendigerweise hohen Konzentrationen oft schlecht pflanzenverträglich. Auch andere Ausdünnungsmittel sind in ihrer Wirkung und Pflanzenverträglichkeit nicht besonders praxistauglich, da abhängig vom Entwicklungsstand der Frucht und den klimatischen Bedingungen bei und nach der Applikation immer eine sehr stark ausgeprägte, sortenabhängige Wirkungsunsicherheit beobachtet wurde.

Alle diese bekannten Ausdünnungsmittel wirken über den Hormonhaushalt der Pflanze wie z.B. über die Pflanzenhormone Auxin und Ethylen beim Apfel. Dadurch bedingt werden mit den Mitteln oft unerwünschte Wirkungen beobachtet wie z.B. eine Minderwirkung bei niedrigen Konzentrationen, eine übermäßige Ausdünnung bei ungünstigen Bedingungen zum Applikationszeitpunkt oder teilweise sogar die Förderung des Fruchtbehanges. Die in vielen Ländern eingesetzten Mittel aus der Gruppe der Carbamate wirken zudem als Insektizid und sind daher nur begrenzt einsetzbar.

Die Verwendung von die Photosynthese inhibierenden Wirkstoffen zur Fruchtausdünnung wurde in J. Amer. Soc. Hort. Sci. 115(1): 14 - 19 (1990) bereits beschrieben. Die darin genannten Wirkstoffe haben aber bisher keine kommerzielle Anwendung als Ausdünnungsmittel gefunden, da die Pflanzenverträglichkeit z.B. bei Metribuzin unbefriedigend ist.

Aus US 4,613,354 ist die Verwendung von Diuron als Entlaubungsmittel insbesondere für Baumwollpflanzen bekannt.

Aus De Valle et al., "Thinning of peaches prunus persica by temporarty inhibition of photosynthesis with terbacil", J. Am Soc. Hort. Sc., Vol. 110, Nr. 6, 1985, S. 804-807 ist bekannt, dass Diuron zwar ein wirksamer Photosynthese-Hemmer für Pfirsichblätter ist aber nicht jeder Photosynthesehemmer ohne phytotoxische Begleiterscheinungen eingesetzt werden kann.

G. I. Moss, "Thinning Washington Navel and 'late Valencia'sweet orange fruits with photosynthetic inhibitors", Hortscience, Vol. 11, Nr. 1, 1976, S. 48-50 beschreibt den Einsatz von 0,25 % (2500 ppm oder 2,5 + 10-3) Diuron zur Verringerung der Fruchtbildung bei Orangen, nicht jedoch dessen Einsatz zur Fruchtausdünnung.

Aus EP 1427 286 A ist bekannt, ein Ausdünnungsmittel enthaltend den die Photosynthese inhibierenden Wirkstoff Metamitron einzusetzen.

Metamitron ist für sein pflanzenschädigendes Potential bekannt. Um Blattnekrosen zu vermeiden ist daher eine zeitlich und mengenmäßig sehr exakte Applikation erforderlich. Vor diesem Hintergrund bestand daher die Aufgabe ein alternatives Ausdünnungsmittel bereitzustellen, das wirksam, und einfach anwendbar ist.

Es wurde nun gefunden, dass Ausdünnungsmittel enthaltend Diuron besonders geeignet sind. Von der Erfindung ist daher ein Verfahren zur Fruchtausdünnung im 6 bis 30 mm-Fruchtstadium an Apfelsorten oder Birnensorten unter Einsatz von Diuron umfasst, das dadurch gekennzeichnet ist, dass ein Mittel enthaltend Diuron auf Pflanzenorgane aufgebracht wird. Weiterhin ist von der Erfindung die Verwendung von Mitteln enthaltend Diuron zur Fruchtausdünnung im 6 bis 30 mm-Fruchtstadium an Apfelsorten oder Birnensorten umfasst.

Es sei an dieser Stelle angemerkt, dass der Rahmen der Erfindung alle beliebigen und möglichen Kombinationen der oben stehenden und im Folgenden aufgeführten, allgemeinen oder in Vorzugsbereichen genannten Komponenten, Wertebereiche, bzw. Verfahrensparameter umfasst.

Das erfindungsgemäße Verfahren eignet sich besonders zur Fruchtausdünnung in Apfelsorten wie z.B. Boskoop, Braebum, Cox Orange, Elstar, Gala, Gloster, Golden Delicious, Fuji, Kanzi, Jamba, James Grieve, Jonagold, Jonathan, Lobo, McIntosh, Red Delicious, Spartan, sowie Birnensorten wie z.B. Conference, Quitte und die asiatische Birne.

Die Fruchtausdünnung erfolgt im 6 bis 30 mm-Fruchtstadium, bevorzugt im 8 bis 17 mm-Fruchtstadium.

Für das erfindungsgemäße Verfahren werden Mittel, insbesondere anwendungsfertige Ausdünnungsmittel, enthaltend Diuron eingesetzt, die teilweise neu und dann ebenfalls Gegenstand der Erfindung sind.

Die Mittel, nachstehend synonym auch als anwendungsfertige Ausdünnungsmittel bezeichnet, enthalten vorzugsweise
- mindestens 70 Gew.-%, vorzugsweise mindestens 80 Gew.-%, besonders bevorzugt mindestens 90 Gew.-% Wasser
- 0,001 Gew.-% bis 0,2 Gew.-% bevorzugt 0,002 Gew.-% bis 0,1 Gew.-% und besonders bevorzugt 0,002 bis 0,2 Gew.-% Diuron

Die erfindungsgemäß eingesetzten Ausdünnungsmittel enthalten neben Diuron und Wasser gegebenenfalls noch Zusatzstoffe.

Weiterhin enthalten die erfindungsgemäß eingesetzten Mittel noch andere Ausdünnungswirkstoffe, Wachstumsregulatoren und andere weitere agrochemische Wirkstoffe oder jeweils nicht.

Für die nachstehend genannten Zusatzstoffe besteht jeweils unabhängig voneinander auch die Möglichkeit, dass sie nicht enthalten sind.

Als Zusatzstoffe können beispielsweise enthalten sein
- Hygroskopische Substanzen und/oder Feuchthaltemittel zur Regulierung der Feuchtigkeit: Hygroskopische Substanzen sind beispielsweise hygroskopische anorganische Salze wie zum Beispiel Calciumchlorid oder Calciumnitrat; Magnesiumchlorid oder Magnesiumnitrat. Geeignete Feuchthaltemittel sind beispielsweise organische Substanzen wie beispielsweise Glycerin, Polydextrose, Sorbit, Xylit, Propylenglykole, Polyethenylenglycole oder Gemische dieser Polyole.
- Grenzflächenaktive Stoffe, wie beispielsweise Tenside. Tenside können beispielsweise nichtionische, kationische und amphotere Tenside, vorzugsweise anionische Tenside sein. Geeignete anionische Tenside sind beispielsweise Alkylsulfate, Alkylethersulfate, Alkylarylsulfonate, Alkylsuccinate, Alkylsulfosuccinate, N-Alkoylsarkosinate, Acyltaurate, Acylisethionate, Alkylphosphate, Alkyletherphosphate, Alkylethercarboxylate, Alpha-Olefinsulfonate, insbesondere die Alkali- und Erdalkalimetallsalze, z.B. Natrium, Kalium, Magnesium, Calcium, sowie Ammonium- und Triethanolamin-Salze. Die Alkylethersulfate, Alkyletherphosphate und Alkylethercarboxylate können jeweils beispielsweise zwischen 1 bis 10 Ethylenoxid- oder Propylenoxid-Einheiten, bevorzugt 1 bis 3 Ethylenoxideinheiten aufweisen. Geeignet sind zum Beispiel Natriumlaurylsulfat, Ammoniumlaurylsulfat, Natriumlaurylethersulfat, Ammoniumlaurylethersulfat, Natriumlaurylsarkosinat, Natriumoleylsuccinat, Ammoniumlaurylsulfosuccinat, Natriumdodecylbenzolsulfonat, Triethanolamindodecyl-benzolsulfonat.
- Benetzungsmittel, wie beispielsweise Alkali-, Erdalkali-, Ammoniumsalze von aromatischen Sulfonsäuren, z.B. Lignin-, Phenol-, Naphthalin-und Dibutylnaphthalinsulfonsäure, sowie von Fettsäuren, Alkyl-und Alkylarylsulfonaten, Alkyl-, Laurylether-und Fettalkoholsulfaten, sowie Salze sulfatierter Hexa-, Hepta-und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl-oder Nonylphenol, Alkylphenol-oder Tributylphenylpolyglycolether, Alkylarylpolyetheralkohole, Isotridecylalkohol, Fettalkoholethylenoxid-Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose.
- Emulgatoren, wie beispielsweise Natrium-, Kalium-und Ammoniumsalze von gradkettigen aliphatischen Carbonsäuren der Kettenlänge C₁₂-C₂₀, Natriumhydroxyoctadecansulfonat, Natrium-, Kalium-und Ammoniumsalze von Hydroxyfettsäuren der Kettenlänge C₁₂-C₂₀ und deren Sulfierungs-bzw. Acetylierungsprodukte, Alkylsulfate, auch als Triethanolaminsalze, Alkyl-(C₁₀-C₂₀)-sulfonate, Alkyl(C₁₀-C₂₀)-arylsulfonate, Dimethyldialkyl(C₈-C₁₈)-ammoniumchlorid, Acyl-, Alkyl-, Oleyl-und Alkylaryloxethylate und ihre Sulfierungsprodukte, Alkalisalze der Sulfobernsteinsäureester mit aliphatischen gesättigten einwertigen Alkoholen der Kettenlänge C₄-C₁₆, Sulfobernsteinsäure-4-Ester mit Polyethylenglykolethern von einwertigen aliphatischen Alkoholen der Kettenlänge C₁₀-C₁₂ (Di-Natriumsalz), Sulfobernsteinsäure-4-Ester mit Polyethylenglykolnonylphenylether (Di-Natriumsalz), Sulfobernsteinsäure bis-cyclohexylester (Natriumsalz), Ligninsulfonsäure sowie deren Calcium-, Magnesium-, Natrium-und Ammoniumsalze, Polyoxyethylensorbitanmonooleat mit 20 Ethylenoxidgruppen, Harzsäuren, hydrierte und dehydrierte Harzsäuren sowie deren Alkalisalze, dodecyliertes Diphenyletherdisulfonsaures Natrium sowie Copolymere aus Ethylenoxyd und Propylenoxyd mit einem Mindestgehalt von 10 Gew.-% Ethylenoxid. Vorzugsweise werden als Emulgatoren verwendet: Natriumlaurylsulfat, Natriumlaurylethersulfat, ethoxyliert (3 Ethylenoxidgruppen); die Polyethylenglykol(4-20)ether des Oleylalkohols sowie die Polyethenoxid-(4-14)ether von Nonylphenol.
- Dispergiermittel, wie beispielsweise Alkylphenolpolyglycolether.
- Stabilisatoren, wie z.B. Cellulose und Cellulosederivate.
- Haftmittel, wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipid sowie Paraffinöle.
- Spreitmittel, wie beispielsweise Isopropylmyristat Polyoxyethylennonylphenylether und Polyoxyethylenlaurylphenylether.
- Organische Lösungsmittel, wie beispielsweise ein- oder mehrwertige Alkohole, Ester, Ketone und Kohlenwasserstoffe. Beispiele für geeignete Lösungsmittel sind Paraffine, z.B. Erdölfraktionen, mineralische und pflanzliche Öle, Butanol oder Glykol sowie deren Ether und Ester, Ketone wie Aceton, Methylethylketon, Methylisobutylketon oder Cyclohexanon.
- Duftstoffe und Farbstoffe, wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink.
- Puffersubstanzen, Puffersysteme oder pH-Wert-Regulatoren.
- Kristallisationsinhibitoren wie N-Alkyl-pyrrolidone, wie beispielsweise N-Octylpyrrolidon und N-Dodecylpyrrolidon, ferner Co-Polymerisate von Polyvinyl-pyrrolidon und Polyvinylalkohol, wie zum Beispiel das unter der Bezeichnung Luviskol VA 64^{(R)} (Fa. BASF) bekannte Polyvinylpyrrolidon / Polyvinylalkohol-Copolymerisat, weiterhin Alkylcarbonsaeure-dimethylamide, wie Decansaeure-dimethylamid oder das unter der Bezeichnung Hallcomid^{(R)} (Fa. Hall Comp.) bekannte C₆₋₁₂-Alkancarbonsaeure-dimethylamid-Gemisch, und ausserdem Co-Polymerisate von Ethylendiamin mit Ethylenoxid und Propylenoxid, wie zum Beispiel das unter der Bezeichnung Synperonic^{(R)} T 304 (Fa. Uniqema) bekannte Produkt.

Andere Ausdünnungswirkstoffe können beispielsweise ausgewählt sein aus der Gruppe bestehend aus:
Metamitron, Carbaryl, 2-(1-Naphthylessigsaeure (NAA), Benzyladenin, Naphthyloxyessigsaeure (NES), Gibberillinsaeure, Paclobutrazol, Ammoniumthiosulfat und Harnstoff sowie Ethylenbildner wie Ethephon insbesondere bei schwer ausdünnbaren bzw. leicht alternierenden Apfelsorten wie Elstar oder Red Delicious.

Als Wachstumsregulator kann beispielsweis Prohexadione-Calcium eingesetzt werden.

Als weitere agrochemische Wirkstoffe können die Ausdünnungsmittel beispielsweise Fungizide und Insektizide enthalten.

Fungizide können beispielsweise ausgewählt sein aus der Gruppe bestehend aus: Schwefel (Netzschwefel), Kupferpräparaten, Benzimidazole, Bitertanol, Dichlofluanid, Fenamidone, Fenarimol, Fenhexamid, Fludioxonil, Fluopyram, Fosetyl-aluminium, Iprodione, Myclobutanil, Penconazole, Triadimenol, Vinclozolin, Tolylfluanid (Euparen M(R)), Captan, Propineb, Tebuconazol Trifloxystrobin, Kresoxim-methyl, Dithianon, Cyprodinil, Pyrimethanil, Mancozeb (Dithane Ultra(R)) und Metiram.

Insektizide können beispielsweise ausgewählt sein aus der Gruppe bestehend aus: Dimethoate, Oxydemeton-methyl, Malathion, Parathion-methyl, Phosphamidon, Permethrin, Amitraz, Clofentezin, Cyhalothrin, Beta-cyfluthrin, Fenproximate, Diflubenzuron, Methoxyfenozide, Tebufenozide, Imidacloprid, Thiacloprid, Thiametoxam, Spirodiclofen, Clofentezine, Fenoxycarb, Parathion-methyl, XenTari(R), Tebufenozide, Diflubenzuron, Pirimicarb, Tebufenpyrad, Fenpyroximate, Rapsoel, Mineraloel und Lecithin, wobei Imidacloprid und Thiacloprid besonders hervorgehoben seien.

Die erfindungsgemäß eingesetzten Mittel sowie die erfindungsgemäßen Mittel weisen vorzugsweise weiterhin
- Calciumsalze und vorzugsweise zusätzlich
- Formiat
auf.

Das Calcium und die Formiate können in die Mittel in Form beliebiger Verbindungen eingebracht werden. Bevorzugt sind für die Einbringung von Formiaten Alkalimetallformiate wie beispielsweise Kaliumformiat und Natriumformiat, Alkalimetalldiformate, wie beispielsweise Kaliumdiformiat und Natriumdiformiat und Erdalkalimetallformiate wie beispielsweise Calciumformiat oder Mischungen solcher Formiate. Bevorzugt sind für die Einbringung von Calcium Calciumformiat und andere Calciumsalze von organischen Carbonsäuren, Calciumchlorid, Calciumnitrat und andere anorganische Calciumsalze, wobei Calciumformiat und Calciumchlorid bevorzugt sind und Calciumformiat besonders bevorzugt ist.

In Ausführungsform beträgt das Gewichtsverhältnis von Diuron, Calcium berechnet als Calciumoxid und Formiat berechnet als Ameisensäure 1: (0,1 bis 500):(0,16 bis 900), bevorzugt 1: (0,5 bis 100): (0,8 bis 180).

Calciumformiat wird besonders bevorzugt eingesetzt weil es Probleme vermeidet, die mit den üblicherweise in agrochemischen Formulierungen verwendeten anderen Calciumsalzen gegebenenfalls auftreten können. So ist Calciumformiat z.B. nicht hygroskopisch oder durch alkalische Verunreinigungen (Ca(OH)₂) verunreinigt wie handelsübliches CaCl₂ sowie nicht so schwer wasserlöslich wie Calciumcarbonat. Calciumformiathaltige Formulierungen sind zudem besser regenfest als die üblicherweise verwendeten Calciumsalze (Nitrat, Carbonat und Chlorid).

Als Nebeneffekt von Calciumsalzen wird beobachtet dass die erfindungsgemäßen Mittel bei der Ausbringung von auf junge Pflanzenorgane (Blätter und Früchte) ausgebracht, gut geeignet sind Calcium-Mangelerscheinungen bei den Pflanzen und vor allem den Früchten wie beispielsweise Stippe bei Äpfeln zu vermeiden.

Überraschenderweise erlaubt insbesondere Calciumformiat gute Formulierbarkeit der erfindungsgemäß einzusetzenden und erfindungsgemäßen Mittel.

Die anwendungsfertigen Ausdünnungsmittel werden vorzugsweise aus Mittelkonzentraten z.B. durch Vermischen von Wasser erhalten, um Herstellung, Lagerung und Transport zu vereinfachen.

Mittelkonzentrate können in beliebiger Form formuliert sein. Geeignete Formulierungen sind beispielsweise Kapselsuspensionen (CS), Wasserlösliche Konzentrate (SL), Suspensionskonzentrate (SC), Spritzpulver (WP), Wasserdispergierbare Granulate (WG), wobei Wasserlösliche Konzentrate (SL), Suspensionskonzentrate (SC) und Wasserdispergierbare Granulate (WG) generell bevorzugt sind. Grundsätzlich sind bevorzugte Formulierungsarten im Wesentlichen abhängig von den eingesetzten Bestandteilen und ihren physikalischen Eigenschaften. Da diese jedoch bekannt sind, ist es für den Fachmann gängige Praxis, in wenigen Versuchen eine bevorzugte Formulierungsart zu ermitteln.

Mittelkonzentrate können beispielsweise enthalten
- Mehr als 0,2 Gew.-% bis 30 Gew.-% bevorzugt 0,5 Gew.-% bis 30 Gew.-% und besonders bevorzugt 2 bis 20 Gew.-% Diuron.

Erfindungsgemäße Mittelkonzentrate enthalten gegebenenfalls weiterhin
- 0,2 Gew.-% bis 30 Gew.-% bevorzugt 2 Gew.-% bis 30 Gew.-% an Calciumsalzen berechnet auf Calciumoxid
sowie gegebenenfalls weiterhin
- 0,2 Gew.-% bis 30 Gew.-% bevorzugt 2 Gew.-% bis 30 Gew.-% an Formiaten berechnet auf Ameisensäure

Bezüglich der weiteren Bestandteile der Mittelkonzentrate neben Diuron wie Zusatzstoffe, andere Ausdünnungsmittel, Wachstumsregulatoren und andere weitere agrochemische Wirkstoffe gelten die vorstehend gemachten Angaben für die anwendungsfertigen Ausdünnungsmittel analog.

Die Anwendung der anwendungsfertigen Mittel erfolgt nach üblichen Methoden, also zum Beispiel durch Spritzen, Giessen, Sprühen, Injizieren oder Streichen. Die Anwendung erfolgt vorzugsweise direkt auf die Pflanzenorgane, insbesondere auf Blätter und/oder Früchte.

Für das erfindungsgemäße Verfahren wird beispielsweise so viel an anwendungsfertigen Mitteln ausgebracht, dass 0,005 bis 2 kg/ha, vorzugsweise 0,01 bis 1 kg/ha, besonders bevorzugt 0,01 bis 0,5 kg/ha an Diuron, vorzugsweise pro Anwendungausgebracht werden.

Die Zahl der Anwendungen kann beispielsweise eins bis sechs vorzugsweise eins, zwei oder drei betragen.Die Erfindung besitzt den Vorteil, dass ein effizientes Ausdünnungsmittel bereitgestellt wird, das ohne nennenswerte sonstige Pflanzenschädigungen anwendbar ist.

### Beispiele

In einem Versuchsfeld, das mit Apfelbäumen der Sorte Braeburn Mariri Red M9 (Pflanzabstände 3,5 x 1,0 m) aus einer Pflanzung im Frühjahr 2006 bepflanzt war, wurden am 21.05.2012 bei 10 mm Fruchtgröße der Königsblüte und am 30.05.2012 bei 10 mm Größe der letzten Blüten jeweils vier Parzellen zu je 5 Bäumen mit definierten Mengen der nachstehend definierten Mittel besprüht. Von den fünf Bäumen wurden jeweils 3 markierte Äste von 3 Bäumen mit einheitlicher Blühstärke nach den in nachstehenden Tabellen 1 angegebenen Kriterien sowie die 3 Bäume in toto nach den in Tabelle 2 angegebenen Kriterien ausgewertet. Die Behandlung erfolgte mit einer Aufwandmenge der anwendungsfertigen Mittel von 500 1/Wasser pro Hektar und Meter Kronenhöhe was hier 1000 l pro Hektar entsprach.

| | |
|---|---|
| Kontrollversuch (1): | Ohne Ausdünnung |
| Hand (9): | Ausdünnung erfolgte ausschließlich manuell |
| Versuche 1 bis 3: | Die Ausdünnung erfolgt mit den oben angegebenen Mengen an anwendungsfertigen Mitteln, die durch Mischung der unten angegebenen Mengen eines Suspensionskonzentrates enthaltend 808 g/l Diuron, 50 g/l Ethandiol, 34, g/l Tenside und weitere Formulierungshilfsmittel sowie 380 g/l Wasser erhalten wurden: |
| Versuch 1 (X0): | 7,500 g des Suspensionskonzentrates auf 10 l Wasser (ca 600 ppm) |
| Versuch 2 (X1): | 3,750 g des Suspensionskonzentrates auf 10 l Wasser (ca 300 ppm) |
| Versuch 3 (X2): | 1,875 g des Suspensionskonzentrates auf 10 l Wasser (ca 150 ppm) |

**Tabelle 1: Auswertung von jeweils drei markierten Äste an drei Bäumen pro Parzelle**

| **Behandlung** | | **Blütenbüschel [n]** | **Früchte vor Junifall [n]** | **Früchte nach Junifall [n]** | **Früchte Je 100 Blütenstände** |
|---|---|---|---|---|---|
| | 1/1 | 14,0 | 11,9 | 6,7 | 47,6 |
| | 1/2 | 16,3 | 18,6 | 12,2 | 74,8 |
| | 1/3 | 12,3 | 9,2 | 7,9 | 64,0 |
| | 1/4 | 16,9 | 12,7 | 11,2 | 66,4 |
| **Kontrolle** | **1** | **14,9** | **13,1** | **9,5** | **63,8** |
| | 9/1 | 16,4 | 21,0 | 13,8 | 83,8 |
| | 9/2 | 17,3 | 17,1 | 10,7 | 61,5 |
| | 9/3 | 19,0 | 16,7 | 12,0 | 63,2 |
| | 9/4 | 16,9 | 14,6 | 11,3 | 67,1 |
| **Hand** | **9** | **17,4** | **17,3** | **11,9** | **68,6** |
| | X0/1 | 9,4 | 6,6 | 0,5 | 5,3 |
| | X0/2 | 10,0 | 5,6 | 0,6 | 5,6 |
| | X0/3 | 10,0 | 7,2 | 0,7 | 7,0 |
| | X0/4 | 14,2 | 13,2 | 1,2 | 8,2 |
| **Versuch 1** | **X0** | **10,9** | **8,1** | **0,7** | **6,7** |
| | X1/1 | 13 | 6,9 | 1,4 | 11,1 |
| | X1/2 | 14,4 | 10,0 | 1,4 | 10,0 |
| | X1/3 | 15,8 | 6,0 | 1,2 | 7,7 |
| | X1/4 | 11,9 | 9,4 | 1,2 | 10,3 |
| **Versuch 2** | **X1** | **13,8** | **8,1** | **1,3** | **9,7** |
| | X2/1 | 13,2 | 11,4 | 2,7 | 20,2 |
| | X2/2 | 15,2 | 10,5 | 4,2 | 27,5 |
| | X2/3 | 12,8 | 12,6 | 4,9 | 38,3 |
| | X2/4 | 16,6 | 11,0 | 3,6 | 21,5 |
| **Versuch 3** | **X2** | **14,4** | **11,4** | **3,8** | **26,5** |

**Tabelle 2: Auswertung der 3 markierten Bäume je Parzelle**

| **Behandlung** | | **Früchte/Baum [n]** | **Ertrag/Baum [kg]** | **Fruchtgröße [mm]** | **Fruchtgewicht (g)** |
|---|---|---|---|---|---|
| | 1/1 | 143,0 | 21,51 | 70,37 | 150,44 |
| | 1/2 | 165,3 | 27,29 | 72,87 | 165,08 |
| | 1/3 | 115,0 | 16,64 | 70,3 | 144,72 |
| | 1/4 | 140,3 | 20,99 | 70,65 | 149,58 |
| **Kontrolle** | **1** | **140,9** | **21,61** | **71,05** | **152,46** |
| | 9/1 | 124,3 | 20,41 | 73,08 | 164,18 |
| | 9/2 | 136,7 | 21,99 | 72,73 | 160,90 |
| | 9/3 | 109,0 | 18,45 | 73,19 | 169,24 |
| | 9/4 | 105,7 | 19,67 | 76,15 | 186,12 |
| **Hand** | **9** | **118,9** | **20,13** | **73,79** | **170,11** |
| | X0/1 | 4,7 | 0,88 | 80,82 | 214,88 |
| | X0/2 | 3,3 | 0,90 | 82,49 | 229,13 |
| | X0/3 | 10,3 | 2,80 | 82,62 | 271,06 |
| | X0/4 | 16,3 | 4,23 | 81,23 | 259,22 |
| **Versuch 1** | **X0** | **8,7** | **2,20** | **81,79** | **243,57** |
| | X1/1 | 7,3 | 1,40 | 78,18 | 231,25 |
| | X1/2 | 19,7 | 5,07 | 83,62 | 257,60 |
| | X1/3 | 23,0 | 5,67 | 81,87 | 246,39 |
| | X1/4 | 8,0 | 2,03 | 83,48 | 263,70 |
| **Versuch 2** | **X1** | **14,5** | **3,54** | **81,79** | **249,74** |
| | X2/1 | 41,0 | 8,63 | 78,57 | 210,56 |
| | X2/2 | 36,3 | 8,40 | 81,04 | 231,21 |
| | X2/3 | 49,7 | 11,50 | 80,40 | 231,53 |
| | X2/4 | 31,0 | 8,27 | 82,14 | 266,68 |
| **Versuch 3** | X2 | 39,5 | 9,20 | 80,54 | 234,99 |

## Patentansprüche

1. Verwendung von Diuron zur Fruchtausdünnung im 6 bis 30 mm-Fruchtstadium an Apfelsorten oder Birnensorten.

2. Verfahren zur Fruchtausdünnung im 6 bis 30 mm-Fruchtstadium an Apfelsorten oder Birnensorten, **dadurch gekennzeichnet, dass** ein Mittel enthaltend Diuron auf Pflanzenorgane aufgebracht wird.

3. Verfahren nach Anspruch 2, **dadurch gekennzeichnet, dass** die Ausdünnung an den Apfelsorten Boskoop, Braebum, Cox Orange, Elstar, Gala, Gloster, Golden Delicious, Fuji, Kanzi, Jamba, James Grieve, Jonagold, Jonathan, Lobo, McIntosh, Red Delicious, Spartan, oder den Birnensorten Conference, Quitte und asiatische Birne erfolgt.

4. Verfahren nach einem der Ansprüche 2 bis 3, **dadurch gekennzeichnet, dass** die Fruchtausdünnung im 8 bis 17 mm-Fruchtstadium erfolgt.

5. Verfahren nach einem der Ansprüche 2 bis 4, **dadurch gekennzeichnet, dass** als Mittel eines eingesetzt wird, das enthält:
• mindestens 70 Gew.-%, vorzugsweise mindestens 80 Gew.-%, besonders bevorzugt mindestens 90 Gew.-% Wasser und
• 0,001 Gew.-% bis 0,2 Gew.-% bevorzugt 0,002 Gew.-% bis 0,1 Gew.-% und besonders bevorzugt 0,002 bis 0,2 Gew.-% Diuron.

6. Verfahren nach Anspruch 5, **dadurch gekennzeichnet, dass** das Mittel weiterhin noch Zusatzstoffe enthält.

7. Verfahren nach Anspruch 5 oder 6, **dadurch gekennzeichnet, dass** das Mittel weiterhin noch andere Ausdünnungswirkstoffe, Wachstumsregulatoren und andere weitere agrochemische Wirkstoffe enthält oder jeweils nicht.

8. Verfahren nach einem der Ansprüche 5 bis 7, **dadurch gekennzeichnet, dass** das Mittel weiterhin enthält:
• Calciumsalze und vorzugsweise zusätzlich
• Formiat.

9. Verfahren nach Anspruch 8, **dadurch gekennzeichnet, dass** es Calciumformiat enthält und vorzugsweise das Gewichtsverhältnis von Diuron, Calcium berechnet als Calciumoxid und Formiat berechnet als Ameisensäure 1: (0,1 bis 500):(0,16 bis 900), bevorzugt 1: (0,5 bis 100): (0,8 bis 180) beträgt.

10. Verfahren nach einem der Ansprüche 2 bis 9, **dadurch gekennzeichnet, dass** so viel an Mittel enthaltend Diuron ausgebracht wird, dass 0,005 bis 2 kg/ha, vorzugsweise 0,01 bis 1 kg/ha, besonders bevorzugt 0,01 bis 0,5 kg/ha an Diuron, vorzugsweise pro Anwendung ausgebracht werden.

11. Verfahren nach einem der Ansprüche 2 bis 10, **dadurch gekennzeichnet, dass** das Verfahren so erfolgt, dass die Mittel enthaltend Diuron in einer bis sechs vorzugsweise in ein, zwei oder drei Anwendungen ausgebracht werden.

## Claims

1. Use of diuron for fruit thinning in the 6- to 30-mm fruit stage in varieties of apple or pear.

2. Method for fruit thinning in the 6- to 30-mm fruit stage in varieties of apple or pear, **characterized in that** a composition comprising diuron is applied to plant organs.

3. Method according to Claim 2, **characterized in that** the thinning takes place in varieties of apple: Boskoop, Braeburn, Cox Orange, Elstar, Gala, Gloster, Golden Delicious, Fuji, Kanzi, Jamba, James Grieve, Jonagold, Jonathan, Lobo, McIntosh, Red Delicious, Spartan, or varieties of pear: Conference, Quince and Asian Pear.

4. Method according to any of Claims 2 to 3, **characterized in that** the fruit thinning takes place in the 8- to 17-mm fruit stage.

5. Method according to any of Claims 2 to 4, **characterized in that** the composition employed is a composition which comprises:
• at least 70% by weight, preferably at least 80% by weight, especially preferably at least 90% by weight of water
• 0.001% by weight to 0.2% by weight, preferably 0.002% by weight to 0.1% by weight and especially preferably 0.002 to 0.2% by weight of diuron.

6. Method according to Claim 5, **characterized in that** the composition furthermore additionally comprises additives.

7. Method according to Claim 5 or 6, **characterized in that** the composition furthermore also comprises, or in each case does not comprise, other thinning agents, growth regulators and other further agrochemical active substances.

8. Method according to any of Claims 5 to 7, **characterized in that** the composition furthermore comprises:
• calcium salts and preferably additionally
• formate.

9. Method according to Claim 8, **characterized in that** it comprises calcium formate and that the weight ratio of diuron, calcium calculated as calcium oxide and formate calculated as formic acid is preferably 1: (0.1 to 500):(0.16 to 900), by preference 1: (0.5 to 100): (0.8 to 180).

10. Method according to any of Claims 2 to 9, **characterized in that** such an amount of composition comprising diuron is applied that 0.005 to 2 kg/ha, preferably 0.01 to 1 kg/ha, especially preferably 0.01 to 0.5 kg/ha of diuron are preferably applied per application.

11. Method according to any of Claims 2 to 10, **characterized in that** the method is carried out such that the compositions comprising diuron are applied in one to six, preferably in one, two or three, applications.

## Revendications

1. Utilisation de diuron pour l'éclaircissage de fruits au stade de fructification de 6 à 30 mm sur des variétés de pommes ou des variétés de poires.

2. Procédé d'éclaircissage de fruits au stade de fructification de 6 à 30 mm sur des variétés de pommes ou des variétés de poires, **caractérisé en ce qu'**un agent contenant du diuron est appliqué sur des organes végétaux.

3. Procédé selon la revendication 2, **caractérisé en ce que** l'éclaircissage a lieu sur les variétés de pommes Boskoop, Braeburn, Cox Orange, Elstar, Gala, Gloster, Golden Delicious, Fuji, Kanzi, Jamba, James Grieve, Jonagold, Jonathan, Lobo, McIntosh, Red Delicious, Spartan, ou les variétés de poires Conference, les coings et les poires asiatiques.

4. Procédé selon l'une quelconque des revendications 2 à 3, **caractérisé en ce que** l'éclaircissage des fruits a lieu au stade de fructification de 8 à 17 mm.

5. Procédé selon l'une quelconque des revendications 2 à 4, **caractérisé en ce que** l'agent utilisé contient :
- au moins 70 % en poids, de préférence au moins 80 % en poids, de manière particulièrement préférée au moins 90 % en poids, d'eau, et
- 0,001% en poids à 0,2 % en poids, de préférence 0,002% en poids à 0,1 % en poids, et de manière particulièrement préférée 0,002 à 0,2 % en poids de diuron.

6. Procédé selon la revendication 5, **caractérisé en ce que** l'agent contient en outre des additifs.

7. Procédé selon la revendication 5 ou 6, **caractérisé en ce que** l'agent contient en outre d'autres agents actifs d'éclaircissage, des régulateurs de croissance et d'autres agents actifs agrochimique, ou ne contient pas chacun d'entre eux.

8. Procédé selon l'une quelconque des revendications 5 à 7, **caractérisé en ce que** l'agent contient en outre :
- des sels de calcium et de préférence en outre
- du formiate.

9. Procédé selon la revendication 8, **caractérisé en ce qu'**il contient du formiate de calcium et, de préférence, le rapport en poids entre le diuron, le calcium calculé en tant qu'oxyde de calcium, et le formiate calculé en tant qu'acide formique est de 1:(0,1 à 500) : (0,16 à 900), de préférence de 1:(0,5 à 100) : (0,8 à 180).

10. Procédé selon l'une quelconque des revendications 2 à 9, **caractérisé en ce que** suffisamment d'agent contenant du diuron est appliqué pour que 0,005 à 2 kg/ha, de préférence 0,01 à 1 kg/ha, de manière particulièrement préférée 0,01 à 0,5 kg/ha, de diuron soit appliqué, de préférence par application.

11. Procédé selon l'une quelconque des revendications 2 à 10, **caractérisé en ce que** le procédé a lieu en appliquant l'agent contenant du diuron en une à six, de préférence en une, deux ou trois applications.
